Europäisches Patentamt

European Patent Office

Office européen des brevets

(19)

(11) Publication number: **0 198 574**
**A2**

## EUROPEAN PATENT APPLICATION

(12)

(21) Application number: 86300660.7

(22) Date of filing: 31.01.86

(51) Int. Cl.⁴: **G 06 F 12/08**

(30) Priority: **05.02.85 US 698364**

(43) Date of publication of application: **22.10.86**
**Bulletin 86/43**

(84) Designated Contracting States: **AT BE CH DE FR GB IT LI LU NL SE**

(71) Applicant: **DIGITAL EQUIPMENT CORPORATION, 111 Powdermill Road, Maynard Massachusetts 01754 (US)**

(72) Inventor: **Shaffer, Stephen Jay, Slough Road, Harvard, MA. 01451 (US)**
Inventor: **Warren, Richard Alan, 8501 Alverstone Way, Austin Texas 78759 (US)**

(74) Representative: **Goodman, Christopher et al, Eric Potter & Clarkson 14 Oxford Street, Nottingham NG1 5BP (GB)**

(54) **Apparatus and method for data copy consistency in a multi-cache data processing system.**

(57) In a multi-processor unit data processing system, apparatus and method are described for providing that only the most recent version of any data signal group will be available for manipulation by a requesting data processing unit. In addition to apparatus for identifying and storing the state of data signal groups, apparatus is provided for communication of selected states to the data processing units.

EP 0 198 574 A2

## APPARATUS AND METHOD FOR DATA COPY CONSISTENCY IN A
## MULTI-CACHE DATA PROCESSING SYSTEM

This invention relates generally to data processing systems and, more particularly, to data processing systems having at least one cache memory unit. The use of cache memory units can result in storage of a data signal group in a plurality of locations. Each copy of a data signal group stored throughout the data processing system must be equivalent. Otherwise procedures must be instituted to avoid inconsistent results that can arise from independent manipulation of the copies of a data signal group by the components of the data processing system.

It is known in data processing systems having the possibility of multiple copies of a data signal group, such as can occur when cache memory units are used with associated data processing units, to provide that one copy of the data signal group is the master copy of the data signal group and any changes in the data signal groups are immediately communicated to master copy. At the same time, other copies of the data signal group can be invalidated when any change in the data signal group is identified. The invalidation of the data signal group is typically performed by changing the state or logic level of stored control signals associated with each stored entry of the non-master data signal groups. The associated stored control signals are sometimes referred to as tag signals, however tag signals can also have other meanings in the computer art. Any access of the cache memory unit data signal group by the associated data processing unit can result in the appropriate control signal state being interrogated and a determination made as to the validity of the data group. If the data signal group is not valid, the signal group is unavailable to the associated data processing unit.

This procedure can suffer from several disadvantages.

The most important disadvantage arises because many implementations of this procedure require duplicate cache directories be associated with each data processing system so that entries of each cache memory unit are known and data signal groups stored in every cache memory unit can be identified. While the duplicate directories can limit the required bus activity the duplicate cache directories must have a plurality of communication paths to update the related control signals when data signal groups are being altered. Thus, this technique of data signal group verification is complex and requires additional apparatus in its implementation.

Similarly, related procedures identify one data signal group, typically the main memory data signal group, as being the "correct" signal group. This procedure requires that when a data group is updated, it must be stored in the main memory and then extracted when a data processing unit requires the data signal group. The main memory access is typically longer than a cache memory access and an undesirable increase in system bus traffic can result from this procedure.

A need has therefore been felt for a data processing system with multiple cache memory units, that has reduced system bus activity while providing an efficient procedure for the individual data processing units associated with each cache memory unit to acquire the preferred copy of a requested data signal groups.

It is therefore an object of the present invention to provide apparatus and method for an improved data processing system.

It is another object of the present invention to provide apparatus and method for an improved data processing system with multiple data processing units.

It is still another object of the present invention to provide a method and apparatus for maintaining equivalent copies of a data signal group in a plurality of locations in a data processing system.

It is a more particular object of the present invention to provide a plurality of control signals for each data signal group, the control signals defining a plurality of states for each data signal group.

It is another particular object of the present invention to provide apparatus and method for identifying an availability of a data signal group that is stored in a plurality of locations in a data processing system.

It is yet another particular object of the present invention to ensure all copies of a data signal group accessible to the data processing units of a data processing system are equivalent.

The present invention therefore provides a data processing system including a memory unit, a system bus, data processing units and cache memory units, in which each cache memory unit has a data processing unit associated therewith, characterised in that it includes:

first means for storing a plurality of data signal groups;

second means for storing address signal groups associated with each data signal groups; and

third means for storing a plurality of control signals associated with each data signal group, a first said control signal indicating that a copy of a data signal group associated with said control signal is stored in at least one other of said cache memory units.

The present invention also provides a method for providing that data entries in a multiple data processing unit data processing system are equivalent characterised in that it comprises the steps of:

identifying to each of said data processing units a presence of multiple copies in said system ;

identifying to each of said data processing units when a one of multiple copies of data signal groups stored in said data processing unit is altered; and

updating unaltered copies of said altered data signal group.

Embodiments of the present invention will now be described by way of example with reference to the accompanying drawings in which:-

Figure 1 is a block diagram of a data processing system having a plurality of data processing units and associated cache memory units;

Figure 2a is a block diagram of a cache memory unit capable of utilizing the instant invention;

Figure 2b is a representation of the address signal group and the address signal subgroups as required for use by a cache memory unit;

Figure 3 defines the plurality of memory locations in a cache memory unit simultaneously accessed by each x-address signal group;

Figure 4 is a summary of the basic states of data signal groups stored in the cache memory unit;

Figure 5 is a summary of the cahe memory unit activity resulting from an attempt by a data processing unit to store an altered data signal group in an associated cache memory unit when the data signal group is currently stored in other cache memory units; and

Figure 6 is a summary of the response of the cache memory unit to address signal groups on the address bus for control signal groups.

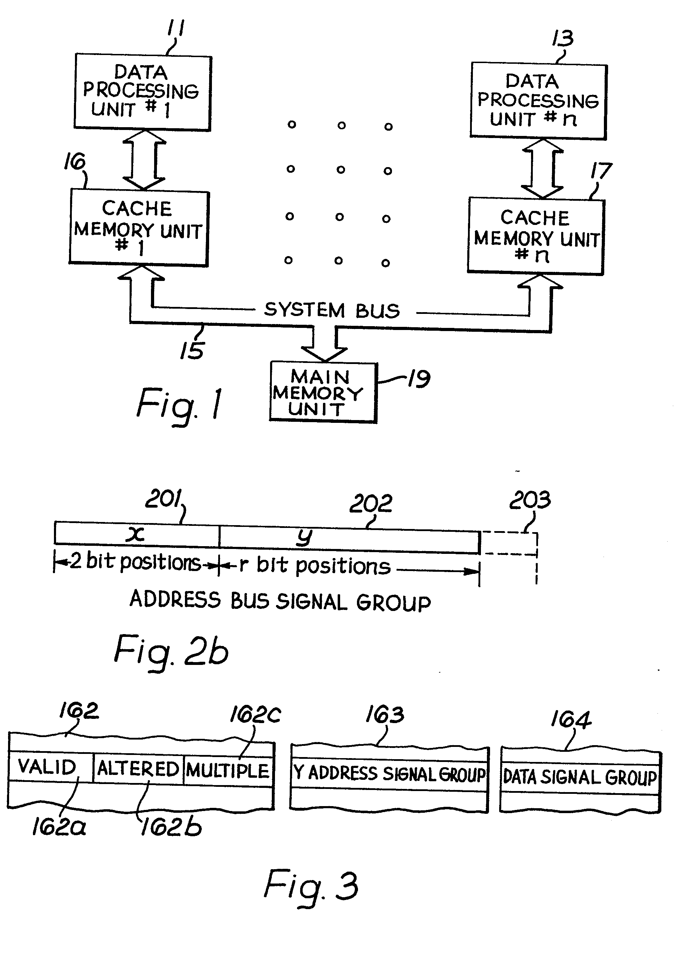

Referring to Figure 1, a block diagram of a data processing system having a plurality of data processing units is shown. The plurality of data processing units, data processing unit #1, 11, through data processing unit #n, 13, perform the manipulation of data signal groups under control of at least one system program. Cache memory unit #1, 16, is coupled to data processing unit #1, 11, and cache memory unit #n, 17, is coupled to data processing unit #n, 13. Similarly, other data processing units, now shown, can be coupled to associated cache memory units. All of the cache memory units are coupled to a system bus 15 and the system bus 15 is in turn coupled to main memory unit 19.

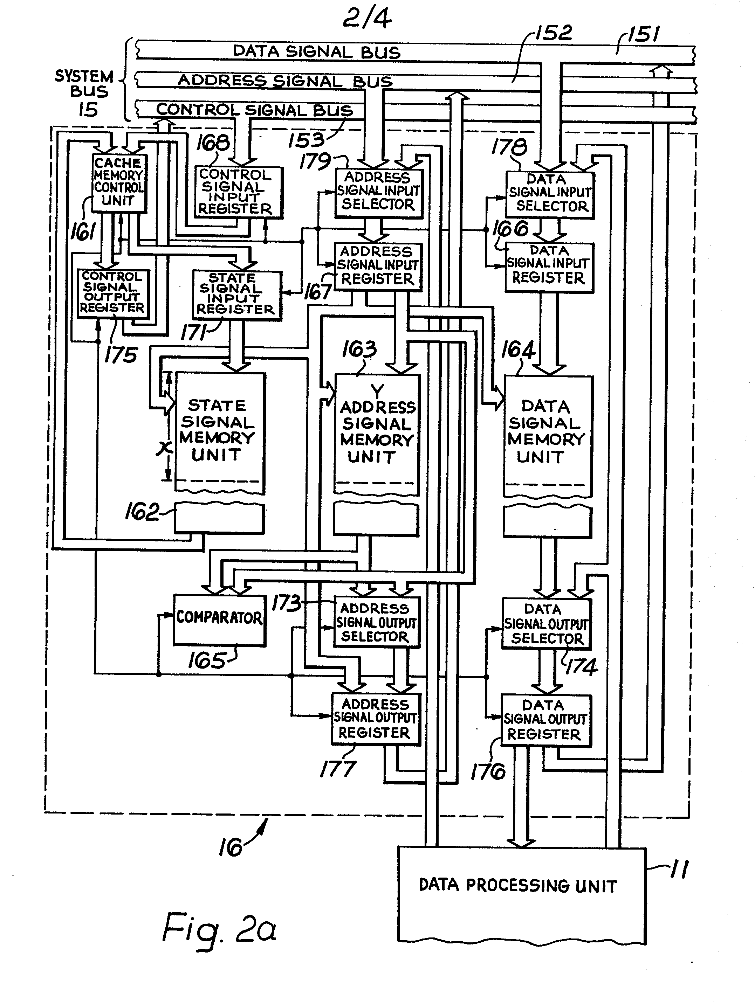

Referring to Figure 2a, the system bus is shown as including three sub-buses, a date signal bus 151, an address signal bus 152, and a control signal bus 153. The cache memory unit 16 is coupled to the system bus 15 and to the data processing unit 11 as follows. Control signal input register 168 receives signals from control signal bus 153, and applies signals to cache memory unit 161. Cache memory control unit 161 applies signals to control signal output register 175 and to state signal input register 171. State signal input register 171 applies signals to state signal memory unit 162. State signal memory unit 162 applies signals to cache memory control unit 161. Control signal output register 175 applies signals to control signal but 153. Address signal input selector 179 receives signals from address signal but 152 and from data processing unit 11 and applies signals to address signals input register 167. Address signal input register 167 applies signals to state signal memory unit 162, to y-address memory unit 163, to data signal memory unit 164, to address signal output selector 173, to comparator 165 and to address signal output register 177. Address signal output selector 173 and comparator 165 also receive signals from y-address signal memory unit 163. Address signal output register 177 also receives signals from address signal output selector 173 and applies signals to address signal bus 152. Data signal input selector 178 receives signals from data signal but 151, and data processing unit 11. Data signal unit register 166 receives signals from data signal input selector 178 and applies signals to data signal memory unit 164. Data signal output selector 174 receives signals from data signal memory unit 164 and from data processing unit 11 and applies signals to data signal output register 176. Data signal output register applies signals to data processing unit 11 and to data signal bus 151. The cache memory control unit 161 is coupled to data processing unit 11, to control signal output register 175, to control signal input register 168, to comparator 165, to address signal output selector 173, to address signal output register 177, to data signal output selector 174, to data signal output register 176; to state signal input register 171, to address signal input selector 179, to address signal input register 167, to data signal input selector 178, and to data signal input register 166.

Referring to Figure 2b, the structure of the address signal groups is defined. For purposes of description of the present invention, the address data signal group is divided into three subgroups; an x-address signal group 201 having q logic signal positions, a y-address signal group 202 having r logic signal positons, and a z-address signal group 203 having s logic signal positions. The x-address signal group defines a physical location of signal groups in the cache memory signal storage components. The y-address signal group is the portion of the address signal group stored in address signal group memory unit 163 at the x position when the data signal group corresponding to the address (x + y) is stored in the data signal group memory unit 164. The z group is an address signal group portion that is redundant when plurality of basic data signal groups (e.g. words) are transferred on the system bus simultaneously and identified by a single address signal group.

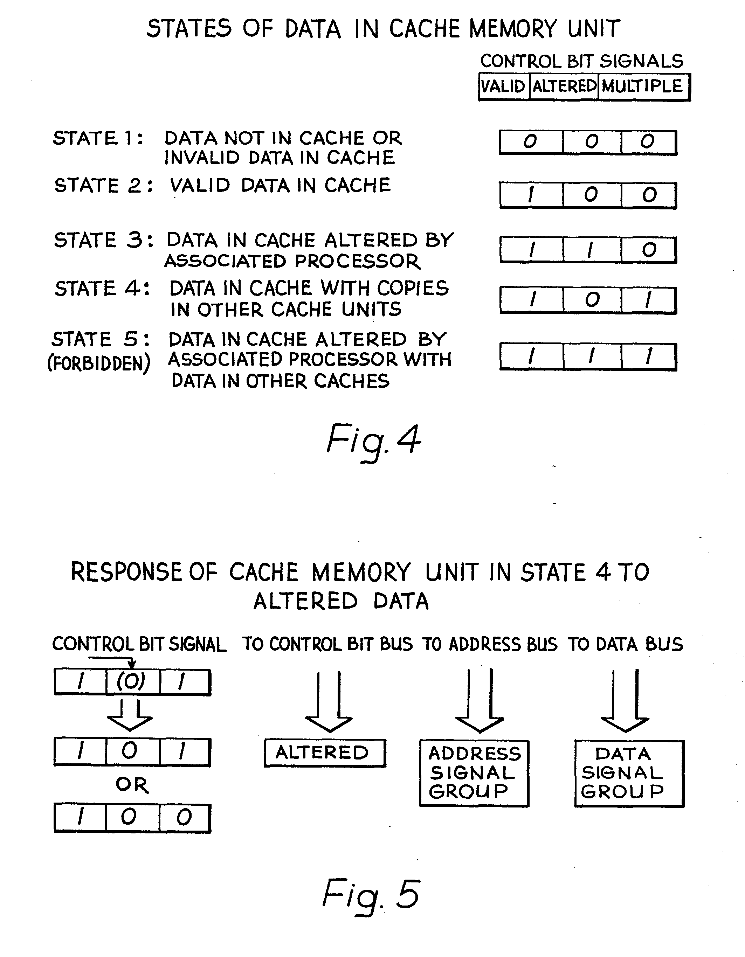

Referring to Figure 3, the various signals and signal groups associated with and addressed by the x-address signal group is shown. In the state signal memory unit 162, a valid signal position 162a, an altered signal position 162b and a multiple signal position 162c are shown. In the y-address signal group memory unit 163, a y-address group is addressed. And in data signal group memory unit 164, a data signal group is addressed by a x-address signal group.

Referring to Figure 4, a summary of the states describing data signal groups in the cache memory unit of the data processing system of the instant invention is shown. Along with a description of the states is a symbolic representation of the signals in the state signal memory unit 162 defining these states. State 1 and indeed the initial state of all cache memory units in a data processing system occurs when a location associated with the group of control signals does not have a data signal group in the associated data signal memory location, the data signal group therein is comprised of random data signals or is comprised of a data signal group that has been determined to be invalid. State 1 is interpreted by the data processing system associated with the cache memory unit as an empty memory location in the cache memory unit. State 2 is present when a valid data signal goupr is stored in the associated data signal group memory unit location. State 3 indicates that the data signal group having a predefined address has been accessed by the associated data processing unit, has been altered, and has been replaced in the memory location in the cache memory unit. State 4 provides an indication that the data signal group memory location associated with the control signal register stores a data signal group that is also stored in at least one other cache memory unit and is identified by the identical address. State 5 is a state of the data signal group that is now allowed by the data processing system and defines the situation where the data signal groups in data signal group memory unit location associated with the control signal register cells is held in at least one additional cache memory unit, that the data signal group has been accessed by the associated data processing unit and has been altered, and that the altered data signal group has been returned to the same data signal group memory unit location.

Referring to Figure 5, the activity that results from an attempt to assert the unpermitted State 5 of Figure 4 is summarized. The control signal memory unit locations assert either State 1 (not shown), State 4 or State 2 depending on the programmed response of the data processing unit to the attempt to assert State 5. State 4 indicates that the other versions of the data have been corrected and are still in the various cache memory units. State 2 indicates that the copies of the data in other cache memories has been rendered inaccessible or more accurately invisible to the associated data processing unit by removal of the valid data bit from the associated control bit register cell. State 1 indicates that the altered data has been determined to be invalid and that memory location is considered to be empty. To implement the architecture associated with State 2 or State 4, the address of the altered data is applied to the control bus, the altered data signal group is applied to the data signal bus. In the preferred embodiment, a "write" signal is asserted prior to communication of the address. The presence of the altered data control signal permits all other cache memory units to invalidate or to update the data signal group at the corresponding cache unit address. The main memory signal group is similarly updated at this time. It will be clear that for State 3, the architecture of the data processing system can support a delayed updating of the associated data signal group in the main memory. The problem present when other cache memory units store copies of non-updated data signal groups is not present here, because a cache memory unit requiring data at that address must communicate on the system bus.

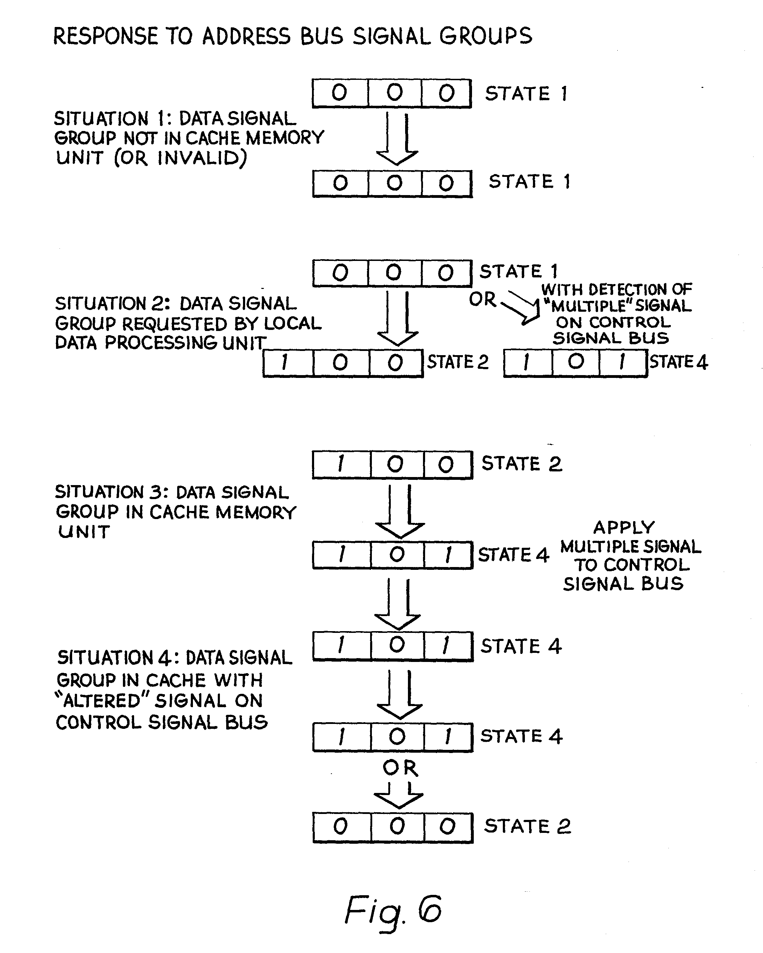

Referring now to Figure 6, a summary is shown of the response of the cache memory unit to an address identified on the address signal group bus. With respect to situation 1, the address on the address signal bus does not correspond to an address having an associated valid data signal group in the local cache memory unit. In this situation, the cache memory unit does not change state. Referring to situation 2, the address on the address signal bus corresponds to an address of data requested by the local cache memory unit. In this case, the cache memory unit stores the associated data and changes the control signal bit to State 2. If a "multiple" signal is asserted on the control signal bus when the address signal group is applied to the address signal group, the control register cells signals are placed in State 4, indicating copies of the data exist in at least one additional cache memory unit. With respect to situation 3, the local cache memory unit identifies an address on the address signal bus as being identified to a non-requested address in the cache memory unit. In this case, the control storage bits are changed to State 4 and a "multiple" signal asserted by the local cache memory unit on the control signal bus to insure that State 4 is applied to control register cells of the cache memory unit requesting and receiving the data signal group. Referring now to situation 4, the address, signal group on the address signal bus and an "altered" signal on the control signal bus causes the cache memory unit to place the control signal bits in State 4 or, as indicated in the discussion of Figure 5, to invalidate the data in the local cache memory unit in the local cache memory and place the associated control signal bit in State 1.

Referring once again to Figure 1, it will be understood that the cache memory units shown as separate entities are frequently implemented as part of the data processing unit. The cache memory unit is a local memory for temporarily storing data signal groups that are more readily available to the associated data processing unit than are the data signal groups in the main memory. In the present invention, the cache memory unit can operate in either the "write back" or "write thru" mode of operation. This type of cache memory unit is distinguished by the mode of operation in which the result of every associated data processing unit operation is stored into the cache memory unit.

The cache illustrated in Figure 2a and Figure 2b has another feature common to cache memory units. The address is divided into three parts. The first part (labelled x in Figure 2b) defines a physical location in the cache memory subunits. When an address signal group is stored in address register and applied to the memory units, a location is addressed in the y-address signal group register and a signal group at the location defined by the x-signal group will be placed in the comparator. The y-address signal group from the memory location can be compared with the y-address signal group of address signal input register 167. If these addresses are the same, the result is communicated to the cache memory control unit 161. The least significant signal bits are typically omitted when the data bus can transfer a plurality of basic data signal groups. For example, if the data signal groups are comprised of signal groups usually referred to as words and the data signals groups are always transferred in groups of two words, the final data bit can be omitted in the address (for purpsoes relevant to the instant invention). Similarly, if four words of data signals are identified by a single address, the final or some other defined location of the two address signals can be omitted. The operation of the cache memory unit is thus complicated by the use of first two subgroups of the address signal group. To determine if a data signal group is stored in the cache memory, it is first necessary to determine when the associated address signal group is stored in the cache memory unit. An address signal group is therefore entered in address signal input register 167. The x-portion of the address signal group is applied to the addressing mechanism of y-address signal memory unit 163. The contents of the physical location in memory unit 163 are applied to comparator 165 along with the y-address portion of the address signal group in address register 167. If the two y-address signal groups are identical, then the associated data signal group is stored in data signal group memory unit 164. However, the control bit signal register is simultaneously addressed at the x-address signal group position. If the valid data bit is not asserted and even if the address comparison is positive, the data signal group is not available and, the interrogation of the cache memory unit by the associated data processing unit is described as a "miss", the data processing system interpreting the lack of a valid signal as an empty data signal group memory unit location. It will be clear that each address signal group asserted on the address signal but must be interrogated by the cache memory unit in order to identify that "multiple" or "altered" conditions are present in the data processing unit.

It will be clear that programs are typically clustered in an address space. A plurality of y-address signal group registers and associated data signal group registers can permit storage in the cache of a plurality of data signal groups with the same x-address signal groups. This technique requires increased storage apparatus as well as a more complex comparison procedure.

A "hashing" algorithm can be utilized when a plurality or multiplicity of physical memory units is not practical. A "hashing" procedure provides a method of redefining address signal groups so that the normally clustered addresses are distributed throughout the memory address space. Still another technique to prevent address clustering is to use some internal portion of an address signal group as the x-address signal group. The present invention will function with any of these and other addressing techniques.

The cache memory unit has the capability for receiving address signal groups from the address signal bus and for applying signals to the address signal bus. In addition, the cache memory unit can retrieve data signal groups from the data signal bus and can apply data signal groups to the data signal bus. Similarly, control signals can be received from and applied to the control signal bus by the cache memory unit. The cache memory unit can supply requested data to the associated data processing unit, and can store data signal groups from the data processing unit.

The function of the apparatus added to the data processing system to implement the states described by the present invention, is to ensure that each data processing unit has available for manipulation only the most recent version of a data signal group. The assumption is made by the architecture that the most recent version of the data signal group is the "correct" version. Other assumptions concerning the "correct" version can be supported by the apparatus of the instant invention.

The multiple locations in which the data signal groups can be stored, i.e. in the cache memory units associated with the data processing units and in the main memory is of concern in cache memory systems wherein data signal groups from the data processing unit are written back into the cache memory unit. The problem relates to the situation where an updated version of a data signal group can exist in one of a plurality of cache memory units while another cache memory unit can contain a "prior" version of the data signal group. To prevent the occurrence of different versions of a data signal group being stored in cache memory units, the data processing unit attempting to store an altered data signal in the associated cache memory unit will temporarily store the altered data signal group in the data processing unit until access to the system but is obtained. The "altered" or "write" signal, applied to the control signal bus by the local cache memory unit, informs all other cache memory units and the main memory that the data at that address placed on the address signal bus is not the correct "version" of the data. If the data signal group resides only in the main memory in addition to the local cache memory unit, then there is no urgency to correct this copy of data signal group. This lack of urgency is a result that any data processing unit requesting a data signal group must use the system bus. The address signal group asserted on the system bus for aquisition of the data signal group will be interrogated by every cache memory unit and the correct "version" of.the data signal group can be applied to the system bus. Thus the requesting cache memory unit will receive a "correct" version of the data.

When more than one cache memory unit has a copy of the data signal group and one of the duplicated data signal groups is to be updated, it is necessary to correct all copies of the data signal group before the storage of the altered signal group in the cache memory unit. Thus the local cache memory unit must be aware that multiple copies exist. The "multiple" control signal bit is asserted by a local cache memory unit when a data signal group stored therein is requested by another data processing unit. The presence of the multiple signal in a local cache memory unit causes the local cache unit to signal via the "write" signal on the control bus that the associated data signal group(s) must be updated in each of the other cache memory units containing a copy of the data signal group. The updating is performed as soon as the data processing unit cache memory unit can gain access to the bus and prior to storage of the altered data signal group in the associated cache memory unit. Thus all copies are updated as soon as possible with the restrictions of the architecture of the data processing system.

The above description is included to illustrate the operation of the preferred embodiment and is not meant to limit the scope of the invention. The scope of the invention is to be limited only by the following claims. From the above discussion, may variations will be apparent to one skilled in the art that would yet be encompassed by the spirit and scope of the invention.

CLAIMS

1. A data processing system including a memory unit, a system bus, data processing units and cache memory units, in which each cache memory unit has a data processing unit associated therewith, characterised in that it includes:

first means for storing a plurality of data signal groups;

second means for storing address signal groups associated with each data signal groups; and

third means for storing a plurality of control signals associated with each data signal group, a first said control signal indicating that a copy of a data signal group associated with said control signal is stored in at least one other of said cache memory units.

2. A data processing system as claimed in Claim 1 characterised in that it includes fourth means for transferring and receiving control signals from said system bus, wherein a cache memory unit applies a signal to said system bus when an address signal group is detected on said system related to a data signal group stored in said cache memory unit.

3. A data processing system as claim in Claim 1 or Claim 2 wherein said control signals indicate that valid data is stored in said cache memory unit.

4. A data processing system as claimed in any one of Claims 1 to 3 characterised in that said control signals indicate that data stored in said cache memory unit has been manipulated by said associated data processing unit.

5. A method for providing that data entries in a multiple data processing unit data processing system are equivalent characterised in that it comprises the steps of:

identifying to each of said data processing units a presence of multiple copies in said system;

identifying to each of said data processing units when a one of multiple copies of data signal groups stored in said data processing unit is altered; and

updating unaltered copies of said altered data signal group.

6. A method of providing that all multiple data entries in a data processing system are equivalent as claimed in Claim 5 further comprising the step of storing altered data groups in an associated data processing system until all data signal groups associated with the equivalent address signal group are identical upon storage of said altered data signal group in said associated cache memory unit.

7. Apparatus for a data processing system including a plurality of data processing units, having cache memory units associated with said data processing units characterised in that the apparatus comprises:

storage means associated with each data signal group stored in a cache memory unit for indicating a presence of the storage of said data signal group by at least one other cache memory units; and

communication means for communication to each of said cache memory units when said data signal group is stored in a plurality of locations.

8. Apparatus as claimed in Claim 7 characterised in that a presence of said first signal and a second signal associated with data signal group causes said at least one other cache memory unit to update said data signal group or to invalidate said data signal group.

9. A method for providing that all copies of a data signal group are equivalent in a data processing system having a plurality of cache memory units characterised in that it comprises the steps of:

associating with each data signal group stored in a cache memory unit signals indicating one of a plurality of states for said data signal groups;

examining each address signal group on a system bus

0198574

to determine a state of a data signal group associated with said address signal group; and

updating data signal groups in said cache memory unit that are determined by said examining step to be non-equivalent to a preferred version of said data signal group.

10. A method for providing that all copies of a data signal group are equivalent as claimed in Claim 9 further characterised by including the steps of: identifying when a plurality of cache memory units store a selected data signal group; and in said associating step, associating a multiple-state signal with said data signal group which signal is stored by a plurality of processors.

11. A method for providing that all copies of a data signal group are equivalent as claimed in Claim 10 further characterised by comprising steps of: providing a signal indicating when data signal groups stored in a cache memory unit have been altered, and preventing an altered signal and a multiple signal from being stored simultaneously in said cache memory unit.

12. A method for providing that all copies of a data signal group are equivalent as claimed in Claim 11 further comprising the step of storing an altered data signal group in a data processing unit storage of said data signal group such that storage of a plurality of versions of a data signal group is not permitted.

13. A data processing system including a plurality of data processing units; each of said data processing units being associated with one of a plurality of cache memory units characterised in that it includes:

identification means for identifying when a data signal group associated with a specified address is stored in a plurality of cache memory units; and

consistency means coupled to said identification means for preventing storage of non-equivalent data signal

-18-

0198574

groups at said specified address in said cache memory units.

14. The data processing system of Claim 13 characterised in that said consistency means includes means for identifying an altered data signal group to said plurality of cache memory units.

15. A data processing system having a plurality of cache memory units, each of said cache memory units comprising:

means for storing a data signal group at a location defined by an associated address signal group;

and characterised in that each cache memory unit includes means for storing a control signal group associated with each of said data signal groups, said control signal group identifying a valid state, an altered state and a multiple state for associated data signal groups.

16. A data processing system as claimed in Claim 15 characterised in that the cache memory unit further includes means for preventing storage of different versions of said associated data signal group.

17. Apparatus for providing data signal group consistency in a data processing system as claimed in any one of Claims 13 to 16 characterised in that it includes

storage means associated with each cache memory unit for providing status signals for each data signal group stored in said cache memory unit, said status signals identifying a valid data signal group, as invalid or missing signal groups, a data signal group stored in at least one other cache memory unit and a data signal group that has been altered by said associated data processing unit; and

control apparatus coupled to said system bus and to said sotrage means for updating said cache memory unit status signals in response to retrieval of data signal groups from said memory unit.

18. Apparatus as claimed in Claim 17 characterised in that said associated data processing unit stores an altered data signal group until unaltered data signal groups and status signals have been updated to provide data signal group consistency when said altered data signal group is stored in said associated cache memory.

19. Apparatus as claimed in Claim 17 or Claim 18 characterised in that it includes means for preventing a multiple data signal group status signal and an altered data signal group status signal from being simultaneously present in said cache memory unit.

*Fig. 1*

ADDRESS BUS SIGNAL GROUP

*Fig. 2b*

*Fig. 3*

Fig. 2a

0198574

## STATES OF DATA IN CACHE MEMORY UNIT

CONTROL BIT SIGNALS

| VALID | ALTERED | MULTIPLE |
|-------|---------|----------|

STATE 1: DATA NOT IN CACHE OR INVALID DATA IN CACHE

| 0 | 0 | 0 |
|---|---|---|

STATE 2: VALID DATA IN CACHE

| 1 | 0 | 0 |
|---|---|---|

STATE 3: DATA IN CACHE ALTERED BY ASSOCIATED PROCESSOR

| 1 | 1 | 0 |
|---|---|---|

STATE 4: DATA IN CACHE WITH COPIES IN OTHER CACHE UNITS

| 1 | 0 | 1 |
|---|---|---|

STATE 5: DATA IN CACHE ALTERED BY
(FORBIDDEN) ASSOCIATED PROCESSOR WITH DATA IN OTHER CACHES

| 1 | 1 | 1 |
|---|---|---|

## Fig. 4

## RESPONSE OF CACHE MEMORY UNIT IN STATE 4 TO ALTERED DATA

CONTROL BIT SIGNAL    TO CONTROL BIT BUS   TO ADDRESS BUS   TO DATA BUS

| 1 | (0) | 1 |
|---|-----|---|

| 1 | 0 | 1 |
|---|---|---|

OR

| 1 | 0 | 0 |
|---|---|---|

| ALTERED |
|---------|

| ADDRESS SIGNAL GROUP |
|----------------------|

| DATA SIGNAL GROUP |
|-------------------|

## Fig. 5

0198574

RESPONSE TO ADDRESS BUS SIGNAL GROUPS

SITUATION 1: DATA SIGNAL GROUP NOT IN CACHE MEMORY UNIT (OR INVALID)

| O | O | O | STATE 1

| O | O | O | STATE 1

SITUATION 2: DATA SIGNAL GROUP REQUESTED BY LOCAL DATA PROCESSING UNIT

| O | O | O | STATE 1

OR WITH DETECTION OF "MULTIPLE" SIGNAL ON CONTROL SIGNAL BUS

| 1 | O | O | STATE 2     | 1 | O | 1 | STATE 4

SITUATION 3: DATA SIGNAL GROUP IN CACHE MEMORY UNIT

| 1 | O | O | STATE 2

| 1 | O | 1 | STATE 4   APPLY MULTIPLE SIGNAL TO CONTROL SIGNAL BUS

SITUATION 4: DATA SIGNAL GROUP IN CACHE WITH "ALTERED" SIGNAL ON CONTROL SIGNAL BUS

| 1 | O | 1 | STATE 4

| 1 | O | 1 | STATE 4

OR

| O | O | O | STATE 2

Fig. 6